Europäisches Patentamt

European Patent Office

Office européen des brevets

(19)

(11) Veröffentlichungsnummer: **0 450 172 A1**

# (12) EUROPÄISCHE PATENTANMELDUNG

(21) Anmeldenummer: 90124411.1

(22) Anmeldetag: 17.12.90

(51) Int. Cl.⁵: **B60T 8/48**

(30) Priorität: 31.03.90 DE 4010411

(43) Veröffentlichungstag der Anmeldung:
09.10.91 Patentblatt 91/41

(84) Benannte Vertragsstaaten:
**DE ES FR GB SE**

(71) Anmelder: **ROBERT BOSCH GmbH**
**Postfach 10 60 50**
**W-7000 Stuttgart 10(DE)**

(72) Erfinder: **Kirstein, Lothar, Dipl.-Ing.**
**Leiterweg 51**
**W-7257 Ditzingen(DE)**

(54) **Hydraulische Zweikreisbremsanlage.**

(57) Eine hydraulische Zweikreisbremsanlage mit Blockierschutzsystem (ABS) und Antriebsschupfregelung (ASR) für Kraftfahrzeuge weist ein Vierkanal-Hydroaggregat (20) mit elektromagnetischen Steuerventilen (31-34) und eine Rückförderpumpe (27) mit zwei getrennten Pumpenelementen (28,29) für jeden Bremskreis auf. Zur Bremsdruckversorgung im ASR-Betrieb ist ein Zusatzhydroaggregat (40) vorgesehen, das Mittel zum Anschließen des Flüssigkeitsbehälters (18) an die Rückförderpumpe (27) und Schaltmittel zum wechselweisen Verbinden des Ausgangs der Rückförderpumpe (27) mit dem Hauptbremszylinder (15) bzw. dem Bremsflüssigkeitsbehälter (18) aufweist. Zum schnellen Bremsdruckabbau in den Radbremszylindern (10) der Antriebsräder (11,12) beim Einbremsen während des ASR-Betriebs weisen die Schaltmittel mindestens ein 3/3-Wegemagnetventil (44) mit einem in einem Ventilbypaß (45) angeordneten Druckbegrenzungsventil (46) auf. Dieses 3/3-Wegemagnetventil (44) verbindet den Ausgang des einem Antriebsrad (11,12) zugeordneten Pumpenelements (29) in der Grundstellung mit dem Hauptbremszylinder (15) und in der Endlagestellung unmittelbar mit dem Bremsflüssigkeitsbehälter (18). In der Mittelstellung sind alle Arbeitsanschlüsse gesperrt, so daß ein Bremsversorgungsdruck aufgebaut werden kann.

Fig. 1

Stand der Technik

Die Erfindung geht aus von einer hydraulischen Zweikreisbremsanlage mit Blockierschutzsystem und Antriebsschlupfregelung für Kraftfahrzeuge, insbesondere Personenkraftwagen, der im Oberbegriff des Anspruchs 1 definierten Gattung.

Bei einer bekannten Zweikreisbremsanlage dieser Art (DE 38 16 073 Al) sind die Auslaßkanäle des Vierkanal-Hydroaggregats für die Radbremszylinder der Antriebsräder dem einen Bremskreis und die Auslaßkanäle für die Radbremszylinder der nicht angetriebenen Räder dem anderen Bremskreis zugeordnet. Die jeweiligen Steuerventile zur Aussteuerung eines radschlupfabhängigen Bremsdrucks in den Auslaßkanälen sind eingangsseitig paarweise pro Bremskreis über einen Einlaßkanal des Hydroaggregats und je eine Verbindungsleitung an den zugeordneten Bremskreisausgängen des Hauptbremszylinders angeschlossen. An dem gleichen Einlaßkanal ist auch der Ausgang des in dem jeweiligen Bremskreis wirkenden Pumpenelements der Rückförderpumpe angeschlossen. Die Schaltmittel zum Verbinden der Rückförderpumpe mit dem Hauptbremszylinder bzw. Bremsflüssigkeitsbehälter weisen ein Umschaltventil auf, das in der Verbindungsleitung zwischen dem mit dem Bremskreis der Antriebsräder verbundenen Einlaßkanal des Hydroaggregats und dem einen Bremskreisausgang des Hauptbremszylinders eingeschaltet ist. Die Anschlußmittel zum Verbinden des Bremsflüssigkeitsbehälters mit der Rückförderpumpe weist ein im Zusatzhydroaggregat angeordnetes hydraulisch steuerbares 2/2-Wegeventil und ein als Vorladepumpe wirkendes drittes Pumpenelement in der Rückförderpumpe auf, die hintereinander zwischen dem Bremsflüssigkeitsbehälter und dem Eingang desjenigen Pumpenelements, das dem Bremskreis der Antriebsräder zugeordnet ist, angeordnet sind. Der Steuereingang des 2/2-Wegeventils ist an einem Bremskreisausgang des Hauptbremszylinders angeschlossen. Bei Steuerdruck am Steuereingang wird das Wegeventil in seine Sperrstellung umgeschaltet. Bei Antriebsschlupfregelung wird das Umschaltventil umgeschaltet, das nunmehr die Verbindung des Bremskreises der Antriebsräder zum Hauptbremszylinder auftrennt und den Bremskreis über ein druckgesteuertes Ventil an den Bremsflüssigkeitsbehälter legt. Die als Niederdruckpumpe wirkende Vorladepumpe speist nunmehr das als Hochdruckpumpe ausgebildete Pumpenelement der Rückförderpumpe, das einen Bremshochdruck erzeugt, der am Eingang der den Antriebsrädern zugeordneten Steuerventile ansteht. Dieser Bremsdruck wird über die Steuerventile in die Radbremszylinder der Antriebsräder eingesteuert, und diese werden dadurch abgebremst. Dreht nur ein Antriebsrad durch, so wird das Steuerventil, das dem Auslaßkanal für den Radbremszylinder des nicht schlüpfenden Antriebsrades zugeordnet ist, in seine Mittelstellung überführt, so daß kein Bremsdruck in diesem Radbremszylinder aufgebaut werden kann. Durch Druckmodulation in dem den schlüpfenden Antriebsrad zugehörigen Radbremszylinder, die durch das diesem zugeordnete Steuerventil bewirkt wird, wird ein zum Abbremsen des schlüpfenden Antriebsrades ausreichender Bremsdruck aufgebaut. Tritt kein Antriebsschlupf mehr auf, so wird durch Maximalstromerregung das Steuerventil in seine Endstellung überführt, in welchem die Auslaßkanäle für die beiden Antriebsräder mit dem Eingang des zugeordneten Pumpenelements der Rückförderpumpe verbunden sind. Von dem Pumpenelement wird nunmehr Bremsflüssigkeit aus dem Radbremszylinder abgepumpt und über das druckgesteuerte Ventil in den Bremsflüssigkeitsbehälter zurückgefördert. Der Bremsdruck in dem Radbremszylinder wird wieder vollständig abgebaut.

Wegen des im Rückförderkreis liegenden druckgesteuerten Ventils ist die Zeit vom Umsteuern der Steuerventile in ihre Ventilendstellung bis zur vollständigen Entlastung der Radbremszylinder der Antriebsräder relativ lang. Im normalen Antriebsschlupfregel-Betrieb (ASR-Betrieb) stört dies nicht. Wird jedoch während des ASR-Betriebs das Bremspedal betätigt, so muß die Bremsanlage sehr schnell den ASR-Betrieb beenden, wozu eine möglichst schnelle Druckentlastung der mit Bremsdruck beaufschlagten Radbremszylinder der Antriebsräder erforderlich ist.

Vorteile der Erfindung

Die erfindungsgemäße Zweikreisbremsanlage mit den kennzeichnenden Merkmalen des Anspruchs 1 hat den Vorteil, daß beim Einbremsen während des ASR-Betriebs die Druckentlastung der im ASR-Betrieb mit Bremsdruck beaufschlagten Radbremszylinder der Antriebsräder über das in seine Endstellung umgesteuerte 3/3-Wegemagnetventil unmittelbar zum Bremsflüssigkeitsbehälter erfolgt, und damit schnell und unabhängig von der Rückförderpumpe ist.

Diese erfindungsgemäße Ausbildung der Schaltmittel im Zusatzhydroaggregat zum wechselweise Verbinden der Rückförderpumpe mit dem Hauptbremszylinder bzw. dem Bremsflüssigkeitsbehälter als 3/3-Wegemagnetventil kann sowohl in Zweikreisbremsanlagen mit sog. vorne/hinten-Aufteilung als auch bei Bremsanlagen mit diagonaler Bremskreisaufteilung eingesetzt werden. Im ersten Fall ist das 3/3-Wegemagnetventil mit seinem im Ventilbypaß liegenden Druckbegrenzungsventil in der Verbindungsleitung zwischen dem einen Bremskreisausgang des Hauptbremszylinders und demjenigen Einlaßkanal des Vierkanalhydroaggregats eingeschaltet, an dem sowohl die dem Bremskreis der Antriebsräder zugeordneten Steuerventile als auch der Ausgang des diesem Bremskreis zugeordneten Pumpenelements der Rückförderpumpe angeschlossen ist. Im zweiten Fall sind insgesamt zwei 3/3-Wegemagnetventile, jeweils eines in einer ersten und zweiten Verbindungsleitung zwischen je einem Bremskreisausgang des Hauptbremszylinders und der Eingangsseite des einem Antriebsrad zugeordneten Steuerventils eingeschaltet. An dieser Verbindungsleitung ist auch jeweils der Ausgang eines Pumpenelements der Rückförderpumpe angeschlossen.

Gemäß einer bevorzugten Ausführungsform der Erfindung weisen die Anschlußmittel im Zusatzhydroaggregat zum Verbinden des Bremsflüssigkeitsbehälters mit der Rückförderpumpe eine Vorladepumpe mit parallel geschaltetem Druckbegrenzungsventil auf, die ausgangsseitig über ein Rückschlagventil mit der Rückförderpumpe verbunden ist. Im Falle der vorne/hinten-Bremskreisaufteilung ist der Ausgang der Vorladepumpe über das Rückschlagventil mit dem Eingang des dem Bremskreis der Antriebsräder zugeordneten Pumpenelements der Rückförderpumpe verbunden. Im Falle der diagonalen Bremskreisaufteilung ist der Ausgang der Vorladepumpe über je ein Rückschlagventil mit den Eingängen beider Pumpenelemente der Rückförderpumpe verbunden.

Zeichnung

Die Erfindung ist anhand von in der Zeichnung dargestellten Ausführungsbeispielen in der nachfolgenden Beschreibung näher erläutert. Es zeigen:

Fig. 1    ein Blockschaltbild einer Zweikreisbremsanlage mit vorne/hinten-Bremskreisaufteilung,

Fig. 2    ein Blockschaltbild einer Zweikreisbremsanlage mit diagonaler Bremskreisaufteilung.

Beschreibung der Ausführungsbeispiele

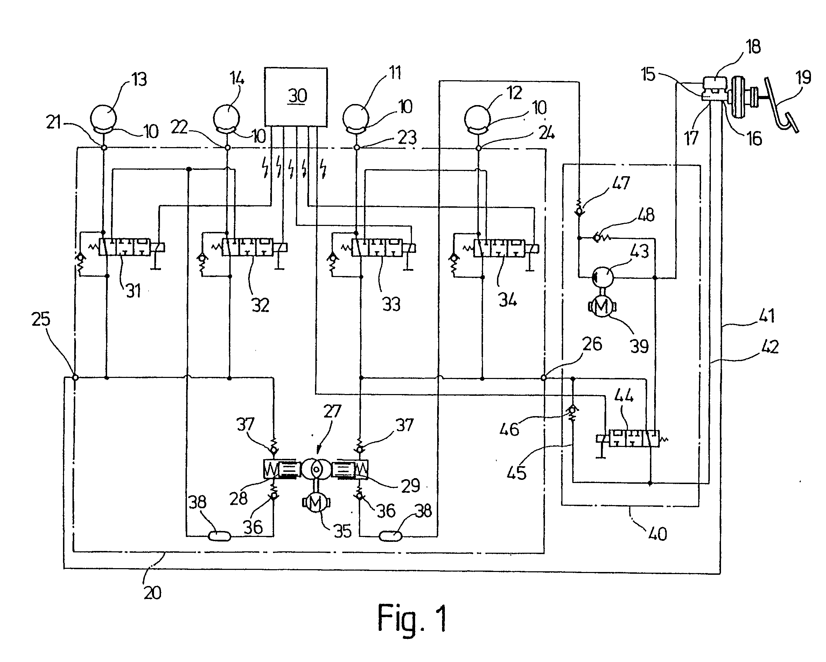

Bei der in Fig. 1 im Blockschaltbild dargestellten hydraulischen Zweikreisbremsanlage mit vorne/hinten- oder schwarz/weiß-Bremskreisaufteilung, Blockierschutzsystem (ABS) und Antriebsschlupfregelung (ASR), auch Vortriebsregelung genannt, für einen Personenkraftwagen sind die Radbremszylinder 10 der Antriebsräder 11,12 in dem einen Bremskreis und die nicht angetriebenen Räder 13,14 in dem anderen Bremskreis angeordnet. Im allgemeinen sind dabei die Antriebsräder 11,12 die Hinterräder des Personenkraftwagens. Zu der Zweikreisbremsanlage gehört in an sich bekannter Weise ein Hauptbremszylinder 15, der zwei getrennte Bremskreisausgänge 16,17 zum Anschließen jeweils eines der beiden Bremskreise aufweist und mit einem Bremsflüssigkeitsbehälter 18 in Verbindung steht. Bei Betätigen eines Bremspedals 19 wird ein gleich großer Bremsdruck über die beiden Bremskreisausgänge 16,17 in den Bremskreisen ausgesteuert.

Zu der Zweikreisbremsanlage gehört ferner ein Vierkanal-Hydroaggregat 20, das vier Auslaßkanäle 21 - 24 und zwei Einlaßkanäle 25 und 26 aufweist. An jedem Auslaßkanal 21 - 24 ist ein Radbremszylinder 10 der Räder 11 - 14 angeschlossen. Jedem Auslaßkanal 21 - 24 ist ein als 3/3-Wegemagnetventil mit Federrückstellung ausgebildetes Steuerventil 31 - 34 zugeordnet. Die Steuerventile 31 - 34 werden von einer Steuerelektronik 30 gesteuert und bauen einen vom Radschlupf abhängigen Bremsdruck in den zugeordneten Radbremszylindern 10 auf. Eine Rückförderpumpe 27, die Bestandteil des Vierkanal-Hydroaggregats 20 ist, weist zwei Pumpenelemente 28,29 auf, die von einem Elektromotor 35 gemeinsam angetrieben werden. Die Pumpenelemente 28,29 dienen zum Rückfördern von Bremsflüssigkeit aus den Radbremszylindern 10 in den Hauptbremszylinder 15 beim Druckabbau in den Bremsen im ASR- und ABS-Betrieb. Jeweils ein Pumpenelement 28,29 ist in einem Bremskreis wirksam und eingangsseitig jeweils an dem dritten Arbeitsanschluß der beiden, jeweils dem gleichen Bremskreis zugeordneten Steuerventile 31 - 34 und ausgangsseitig an je einem Einlaßkanal 25 bzw. 26 des Hydroaggregats 20 angeschlossen. Vor und nach jedem Pumpenelement 28,29 sind ein Pumpeneinlaßventil 36 und ein Pumpenauslaßventil 37 angeordnet. Den Pumpeneinlaßventilen 36 vorgeschaltete Niederdruck-Speicherkammern 38 lassen einen Druckabbau unabhängig von der Pumpenfördermenge zu und überwinden den Öffnungsdruck der Pumpeneinlaßventile 36. Die Steuerventile 31 - 34 sind eingangsseitig mit ihrem ersten Arbeitsanschluß an je einem Einlaßkanal 25 bzw. 26 und mit ihrem zweiten Arbeitsanschluß an dem zugeordneten Auslaßkanal 21 - 24 angeschlossen. Die Steuerventile 31 - 34 sind in bekannter Weise so ausgebildet, daß in ihrer ersten, nicht erregten Ventilgrundstellung ein ungehinderter Durchgang von den Einlaßkanälen 25,26 zu den Auslaßkanälen 21 - 24 besteht, wodurch der vom Hauptbremszylinder 15 eingesteuerte Bremsdruck in die Radbremszylinder 10 der Räder 11 - 14 gelangt. In der zweiten Ventilmittelstellung, die durch Erregung der Steuerventile 31 - 34 mit halbem Maximalstrom herbeigeführt wird, ist dieser Durchgang unterbrochen und alle Arbeitsanschlüsse abgesperrt, so daß der in den Radbremszylindern 10 aufgebaute Bremsdruck konstant gehalten wird. In der dritten Ventilendstellung, die durch Ventilerregung mit Maximalstrom eingestellt wird, werden die Ausgangskanäle 21 und 22 bzw. 23 und 24, und damit die Radbremszylinder 10 der Räder 11- 14, mit dem Eingang der Pumpenelemente 28 bzw. 29 verbunden, so daß zwecks Bremsdruckabbau Bremsflüssigkeit wieder aus den Radbremszylindern 10 abgelassen werden kann. Der Einlaßkanal 25 des Vierkanal-Hydroaggregats 20 ist über eine erste Verbindungsleitung 41 mit dem Bremskreisausgang 16 des Hauptbremszylinders 15 und der Einlaßkanal 26 ist über eine zweite Verbindungsleitung 42 mit dem Bremskreisausgang 17 des Hauptbremszylinders 15 verbunden.

Ein Zusatz-Hydroaggregat 40 dient zum Erzeugen eines Bremsversorgungsdrucks bei Antriebsschlupfregelung (ASR-Betrieb). Es weist eine als Niederdruckpumpe ausgebildete Vorladepumpe 43 und ein 3/3-Wegemagnetventil 44 mit Federrückstellung und einem Ventilbypaß 45 auf, in dem ein Druckbegrenzungsventil 46 angeordnet ist. Die von einem Elektromotor 39 angetriebene Vorladepumpe 43 ist eingangsseitig mit dem Bremsflüssigkeitsbehälter 18 und ausgangsseitig über ein Rückschlagventil 47 mit dem Eingang des Pumpenelements 29 verbunden, das dem Bremskreis der Antriebsräder 11,12 zugeordnet ist. Zweckmäßigerweise ist dabei der Anschluß der Vorladepumpe 43 über die von den Steuerventilen 33,34 zu dem Pumpenelement 29 führende, den Niederdruckspeicher 38 enthaltende Verbindungsleitung geführt. Zwischen dem Ein- und Ausgang der Vorladepupe 43 ist ein Druckbegrenzungsventil 48 angeschlossen.

Das 3/3-Wegemagnetventil 44 ist mit seinem ersten und zweiten Arbeitsanschluß in die Verbindungsleitung 42 eingeschaltet, so daß der erste Arbeitsanschluß mit dem Einlaßkanal 26 des Vierkanal-Hydroaggregats 20 und der zweite Arbeitsanschluß mit dem Bremskreisausgang 17 des Hauptbremszylinders 15 verbunden ist, während sein dritter Arbeitsanschluß mit dem Ausgang des Bremsflüssigkeitsbehälters 18 bzw. dem Eingang der Vorladepumpe 43 verbunden ist. Das 3/3-Wegemagnetventil 44 ist von der Steuerelektronik 30 gesteuert und so ausgebildet, daß es in seiner in Fig. 1 dargestellten unerregten Grundstellung den ersten Arbeitsanschluß mit dem zweiten Arbeitsanschluß verbindet, also die zweite Verbindungsleitung 42 durchgängig schaltet, in seiner durch Erregung mit halbem Maximalstrom herbeigeführten Mittelstellung alle Arbeitsanschlüsse absperrt und in seiner dritten, durch Erregung mit Maximalstrom herbeigeführten Endstellung den ersten Arbeitsanschluß auf den dritten Arbeitsanschluß legt und somit den Einlaßkanal 26 des Vierkanal-Hydroaggregats 20 mit dem Flüssigkeitsbehälter 18 verbindet.

Das 3/3-Wegemagnetventil 44 wird von der Steuerelektronik 30 immer dann in seine Mittelstellung überführt, wenn der Steuerelektronik 30 ein Antriebsschlupf mindestens eines der Antriebsräder 11,12 von hier nicht dargestellten Radschlupfsensoren mitgeteilt wird. In diesem Fall erzeugt das von der eingeschalteten Vorladepumpe 43 gespeiste Pumpenelement 29 der eingeschalteten Rückförderpumpe 27 Hochdruck, der an den Steuerventilen 33,34 ansteht, die den Auslaßkanälen 24 für die Radbremszylinder 10 der Antriebsräder 11,12 zugeordnet sind. In dieser Ventilmittelstellung sind alle Arbeitsanschlüsse abgesperrt, und es besteht lediglich eine Verbindung des Einlaßkanals 26 zu dem Bremskreisausgang 17 des Hauptbremszylinders 15 über das Druckbegrenzungsventil 46. Damit wird der von dem Pumpenelement 29 erzeugte Bremshochdruck auf einen vorgegebenen konstanten Wert gehalten.

Dreht beispielsweise das Antriebsrad 11 durch, so wird das Steuerventil 34 des nicht schlüpfenden Antriebsrads 12 in die Ventilmittelstellung überführt, so daß der Auslaßkanal 24 von dem von dem Pumpenelement 29 erzeugten Bremshochdruck abgesperrt ist. Über das andere Steuerventil 33 wird Bremsdruck in dem Radbremszylinder 10 des durchdrehenden Antriebsrads 11 aufgebaut, das damit abgebremst wird. Der erforderliche Bremsdruck wird durch Druckmodulation, die durch Schalten des Steuerventils 33 bewirkt wird, eingestellt. Gegen Ende der Antriebsschlupfregelung, wenn kein Antriebsschlupf mehr sensiert wird, erfolgt die Entlastung der Radbremszylinder 10 über die unerregten Steuerventile und das unerregte 3/3-Wegemagnetventil 44 zum Hauptbremszylinder 11. Bei Antriebsschlupf beider Antriebsräder 11,12 werden beide Steuerventile 33,34 zur Bremsdruckmodulation angesteuert.

Wird während der Antriebsschlupfregelung das Bremspedal 19 betätigt, so werden die Steuerventile 33,34, die den Antriebsrädern 11,12 zugeordnet sind, ebenso wie das 3/3-Wegemagnetventil 44 in die Ventilendstellung überführt. Durch die unmittelbare Verbindung der Radbremszylinder 10 mit dem Bremsflüssigkeitsbehälter 18 wird ein in einem Radbremszylinder 10 aufgebauter Radbremsdruck schlagartig abgebaut, so daß sehr schnell die Bremsanlage mit Blockierschutz (ABS) funktionsfähig ist. In die nicht angetriebenen Räder 13,14 wird sofort eingebremst. In die Antriebsräder 11,12 kann nach Entspannen zum Bremsflüssigkeitsbehälter 18 und Umschalten des 3/3-Wegemagnetventils 44 eingebremst werden.

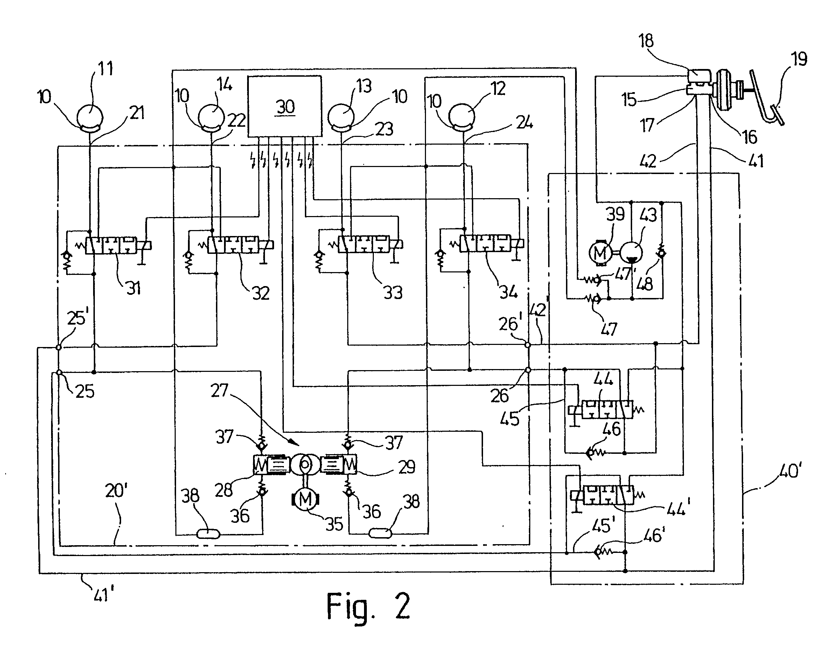

Bei der in Fig. 2 im Blockschaltbild dargestellten hydraulischen Zweikreisbremsanlage mit diagonaler Bremskreisaufteilung, Blockierschutzsystem (ABS) und Antriebsschlupfregelung (ASR) für Personenkraftwagen ist jeweils ein Antriebsrad 11,12 einem von zwei Bremskreisen zugeordnet. Im allgemeinen sind diese Antriebsräder 11,12 die Vorderräder des Personenkraftwagens. Soweit die Zweikreisbremsanlagen mit der in Fig. 1 beschriebenen Zweikreisbremsanlage mit vorne/hinten-Bremskreisaufteilung übereinstimmen sind gleiche Bauelemente mit gleichen Bezugszeichen versehen.

Beim dem Vierkanal-Hydroaggregat 20' sind die beiden Einlaßkanäle 25,26 jeweils in zwei Kanäle 25 und 25' bzw. 26 und 26' aufgetrennt. Mit den Einlaßkanälen 25 bzw. 26 sind nach wie vor die Ausgänge der Pumpenelemente 28,29 verbunden. An den Ausgängen 25,26 sind weiterhin eingangsseitig die Steuerventile 31 und 34 angeschlossen, die den Antriebsrädern 11,12 in jedem Bremskreis zugeordnet sind. Mit den Einlaßkanälen 25' und 26' sind die Steuerventile 32,33, die den nicht angetriebenen Rädern 13,14 zugeordnet sind, eingangsseitig verbunden. Die Einlaßkanäle 25' und 26' sind durch eine dritte und vierte Verbindungsleitung 41' und 42' mit den Bremskreisausgängen 16,17 des Hauptbremszylinders 15 verbunden. Das Zusatz-Hydroaggregat 40' weist noch ein zweites 3/3-Wegemagnetventil 44' auf, das identisch dem 3/3-Wegemagnetventil 44 ausgebildet und ebenfalls mit einem Bypaß 45' versehen ist, in dem ein Druckbegrenzungsventil 46' angeordnet ist. Dieses 3/3-Wegemagnetventil 44' mit Ventilbypaß 45' und Druckbegrenzungsventil 46' ist in der ersten Verbindungsleitung 41 zwischen dem Bremskreisausgang 16 des Hauptbremszylinders 15 und dem Einlaßkanal 25 des Vierkanal-Hydroaggregats 20 so eingeschaltet, daß sein erster Arbeitsanschluß an dem Einlaßkanal 25, sein zweiter Arbeitsanschluß an dem Bremskreisausgang 16 liegt und sein dritter Arbeitsanschluß mit dem Bremsflüssigkeitsbehälter 18 verbunden ist. Das 3/3-Wegemagnetventil 44 wird ebenfalls von der Steuerelektronik 30 angesteuert. Zusätzlich ist der Ausgang der Vorladepumpe 43 im Zusatz-Hydroaggregat 40' über ein weiteres Rückschlagventil 47' an dem Eingang des Pumpenelements 28 angeschlossen, wobei der Anschluß wiederum über die die Niederdruck-Speicherkammer 38 enthaltende Verbindungsleitung zwischen den dritten Arbeitsanschlüssen der Steuerventile 31,32 und dem Pumpenelement 28 geführt ist.

Die Funktionsweise der Zweikreisbremsanlage gemäß Fig. 2 bei Antriebsschlupfregelung ist die gleiche wie zuvor beschrieben mit dem Unterschied, daß nunmehr zwei 3/3-Wegemagnetventile 44 und 44' in der beschriebenen Weise angesteuert werden.

**Patentansprüche**

1. Hydraulische Zweikreisbremsanlage mit Blockierschutzsystem und Antriebsschlupfregelung für Kraftfahrzeuge, insbesondere Personenkraftwagen, mit einem zwei getrennte Bremskreisausgänge aufweisenden Hauptbremszylinder zum Aussteuern eines Bremsdrucks durch Bremspedalbetätigung, mit einem mit dem Hauptbremszylinder in Verbindung stehenden Bremsflüssigkeitsbehälter, mit einem an den beiden Bremskreisausgängen des Hauptbremszylinders angeschlossenen Vierkanal-Hydroaggregat, das vier Auslaßkanäle zum Anschließen von Radbremszylindern der Fahrzeugräder, jeweils einem Auslaßkanal zugeordnete, als 3/3-Wegemagnetventile mit Federrückstellung ausgebildete Steuerventile zum Aussteuern eines radschlupfabhängigen Bremsdrucks und eine Rückförderpumpe mit zwei getrennten, in jeweils einem Bremskreis wirksamen Pumpenelementen zum Rückfördern von Bremsflüssigkeit aus den Radbremszylindern in den Hauptbremszylinder beim Bremsdruckabbau aufweist, die jeweils eingangsseitig mit dem einen Bremskreis zugehörigen Auslaßkanälen verbindbar und ausgangsseitig mit dem diesem Bremskreis zugeordneten Bremskreisausgang des Hauptbremszylinders verbunden sind, und mit einem Zusatz-Hydroaggregat zum Erzeugen eines Bremsversorgungsdrucks bei Antriebsschlupfregelung, das Anschlußmittel zum Verbinden des Bremsflüssigkeitsbehälters mit dem Eingang der Rückförderpumpe und Schaltmittel zum wechselweisen Verbinden des Ausgangs der Rückförderpumpe mit dem Hauptbremszylinder bzw. dem Bremsflüssigkeitsbehälter aufweist, dadurch gekennzeichnet, daß die Schaltmittel mindestens ein 3/3-Wegemagnetventil (44) mit Federrückstellung und einem im einem Ventilbypaß (45) angeordneten Druckbegrenzungsventil (46) aufweisen, daß von den drei gesteuerten Ventilanschlüssen des 3/3-Wegemagnetventils (44) der erste mit dem Ausgang eines einem Bremskreis mit mindestens einem Antriebsrad (11,12) zugeordneten Pumpenelements (29) der Rückförderpumpe (27), der zweite mit dem diesem Bremskreis zugehörigen Bremskreisausgang (17) des Hauptbremszylinders (15) und der dritte mit dem Bremsflüssigkeitsbehälter (18) verbunden ist, und daß das 3/3-Wegemagnetventil (44) derart ausgebildet ist, daß der erste Ventilanschluß in der unerregten Ventilgrundstellung mit dem zweiten Ventilanschluß und in der durch Maximalstromerregung eingestellten Ventilendstellung mit dem dritten Ventilanschluß verbunden ist und in der durch Erregung mit halbem Maximalstrom einstellbaren Ventilmittelstellung alle Ventilanschlüsse abgesperrt sind.

2. Bremsanlage nach Anspruch 1, dadurch gekennzeichnet, daß die beiden Antriebsräder (11,12) in dem gleichen Bremskreis liegen und die diesem Bremskreis zugehörigen Steuerventile (33,34) eingangsseitig zusammen mit dem Ausgang des diesem Bremskreis zugehörigen Pumpenelements (29) der Rückförderpumpe (27) an einem Einlaßkanal (26) des Vierkanal-Hydroaggregats (20) liegen, daß das 3/3-Wegemagnetventil (44) mit im Ventilbypaß (45) liegendem Druckbegrenzungsventil (46) in der Verbindung (42) zwischen Einlaßkanal (26) und Bremskreisanschluß (17) eingeschaltet ist und daß die Anschlußmittel (43) den Bremsflüssigkeitbehälter (18) mit dem Eingang des dem Bremskreis der Antriebsräder (11,12) zugeordneten Pumpenelements (29) verbinden.

3. Bremsanlage nach Anspruch 1, dadurch gekennzeichnet, daß die beiden Antriebsräder (11,12) unterschiedlichen Bremskreisen angehören, daß die den Antriebsrädern (11,12) eines jeden Bremskreises zugeordneten Steuerventile (31,34) eingangsseitig jeweils zusammen mit dem Ausgang eines Pumpenelements (28,29) über eine erste und zweite Verbindungsleitung (25,26) und die den nicht angetriebenen Antriebsrädern (13,14) zugeordneten Steuerventile (32,33) über eine dritte und vierte Verbindungsleitung (41',42') an den beiden Bremskreisausgängen (16,17) des Hauptbremszylinders (15) angeschlossen sind, daß in der ersten und zweiten Verbindungsleitung (25,26) jeweils ein 3/3-Wegemagnetventil (44,44') mit im Ventilbypaß (45,45') angeordnetem Druckbegrenzungsventil (46,46') eingeschaltet ist und daß die Anschlußmittel (43) den Bremsflüssigkeitsbehälter (18) mit den Eingängen beider Pumpenelemente (28,29) der Rückförderpumpe (27) verbinden.

4. Bremsanlage nach einem der Ansprüche 1 - 3, dadurch gekennzeichnet, daß die Anschlußmittel eine Vorladepumpe (43) aufweisen, die eingangsseitig an dem Bremsflüssigkeitsbehälter (18) und ausgangsseitig über ein Rückschlagventil (47,47') an dem Eingang des oder der Pumpenelemente (28,29) der Rückförderpumpe (27) angeschlossen ist.

5. Bremsanlage nach Anspruch 4, dadurch gekennzeichnet, daß der Vorladepumpe (43) ein Druckbegrenzungsventil (48) parallel geschaltet ist.

Fig. 1

EP 0 450 172 A1

Fig. 2

EP 0 450 172 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 633 341  (DAIMLER-BENZ) <br> * Spalte 8, Zeile 4 - Spalte 10, Zeile 18 * * Spalte 11, Zeile 57 - Spalte 12, Zeile 26; Figur 1 * <br> — — — | 1,2,4 | B 60 T 8/48 |
| A | PATENT ABSTRACTS OF JAPAN vol. 13, no. 183 (M-820)(3531) 28 April 1989, <br> & JP-A-01 012964 (NIPPON EE.B.S.) 17 Januar 1989, <br> * das ganze Dokument * <br> — — — | 1,2,4,5 | |
| A,D | DE-A-3 816 073  (ROBERT BOSCH) <br> * das ganze Dokument * <br> — — — | 1,2,4,5 | |
| A | DE-C-3 900 851  (DAIMLER-BENZ) <br> * Spalte 7, Zeile 21 - Spalte 13, Zeile 22; Figur 1 * <br> — — — | 1,2,4,5 | |
| A | DE-C-3 900 850  (DAIMLER-BENZ) <br> * Spalte 8, Zeile 10 - Spalte 12, Zeile 15; Figur 1 * <br> — — — | 1,2,4,5 | |
| A | EP-A-0 303 019  (ALFRED TEVES) <br> * Spalte 5, Zeile 42 - Spalte 7, Zeile 3; Figuren 3, 4 * <br> — — — — — | 2,3 | |

**RECHERCHIERTE SACHGEBIETE (Int. Cl.5)**

B 60 T

Der vorliegende Recherchenbericht wurde für alle Patentansprüche erstellt

| Recherchenort | Abschlußdatum der Recherche | Prüfer |
|---|---|---|
| Den Haag | 20 Juni 91 | MEIJS P.C.J. |